# EUROPEAN PATENT SPECIFICATION

(11) **EP 3 944 178 B1**
(45) Date of publication and mention of the grant of the patent: **29.10.2025**
(21) Application number: 21194878.1
(22) Date of filing: 30.12.2014
(51) Int. Cl.: G06Q 30/06

(54) **UNIVERSAL PAYMENT METHOD AND SYSTEM**
UNIVERSELLES ZAHLUNGSVERFAHREN UND -SYSTEM
PROCÉDÉ ET SYSTÈME DE PAIEMENT UNIVERSEL

(30) Priority: 14.02.2014 FR 1451203
(43) Date of publication of application: 26.01.2022
(62) Divisional of application: 14827243.8
(73) Proprietor: Bancontact Payconiq Company, 1040 Bruxelles (BE)
(72) Inventor: HUQUE, Thierry, 1367 Grand-Rosière (BE)
(74) Representative: Cabinet Beaumont

(56) References cited:
- WO-A2-2004/013734
- WO-A2-2008/064187
- US-A1- 2008 010 193
- US-A1- 2013 060 618

## Description

### FIELD

The present disclosure relates to a method and system for performing an electronic transaction using a mobile device.

### BACKGROUND

Using mobile communication devices, such as mobile telephones, to perform electronic payment transactions is becoming increasingly popular, and has the potential to one day entirely replace most card payments.

As one form of payment mechanism, mobile telephones and other types of mobile devices are increasingly being equipped with NFC (Near-Field-Communication) interfaces, which enable them to perform electromagnetic transponder functions in addition to their other functions. In particular, such devices are able to emulate the functions of an electromagnetic transponder, which could be of the contactless card type. Such functionality for example enhances the mobile device, by allowing it to be used for various applications, for example as an electronic wallet allowing payments to be made for accessing services such as transport networks.

It has been proposed to use a payment application, installed on a mobile device, to implement payment transactions. However, there are technical problems associated with existing solutions. US 2008/010193 A1 discloses a system for payment method selection in a mobile environment. WO 2008/064187 A2 discloses a method for linking to an application on a wireless device. WO 2004/013734 A2 discloses a method for executing applications on a mobile device. US 2013/060618 A1 discloses a system for accessing a electronic wallet.

### SUMMARY

It is an aim of embodiments of the present disclosure to at least partially address one or more problems in the prior art.

One objective of one or more of the embodiments described herein is to provide a mobile payment solution that fits with most technical requirements of the card payment industry.

In particular, merchants and other card acceptors, internet payment service providers, and to a lesser extent, acquirers, are generally not willing to deploy brand-dependent technologies. When new technologies are introduced, a market pressure appears over time to evolve towards standardized acceptance technologies that are shared amongst brands (open and brand-neutral acceptance technology).

There is in addition a significant regulatory pressure to de-couple scheme (brand) and processing solutions, leading to a more competitive market space.

It is therefore desirable to define a mobile payment solution that can work efficiently in multi-brand mode, without introducing a significant market advantage for some brands. For example, in a context where several payment brand/solutions are being deployed on mobile phones, there is a need for a way for a merchant application to initiate the payment in a single call and let the user choose amongst the payment applications present on the phone. However, there are technical difficulties in providing such a solution.

According to one aspect, there is provided a mobile device comprising: a memory storing a plurality of transaction applications, wherein each transaction application is configured to be capable of being called by a generic application calling code, such as a generic URL (universal resource locator) and by an application specific calling code, such as an application specific URL, wherein each transaction application is further configured, for example when executed by a processing device of the mobile device, to implement a universal transaction application selector function that displays on a display of the mobile device a choice between two or more of the transaction applications and calls, based on an input from a user of the mobile device, one of said two or more transaction applications using one of the application specific calling codes; and when called by the application specific calling code, to process an electronic transaction using the mobile device.

According to one embodiment, the electronic transaction is a payment transaction, said transaction applications are payment applications, and said universal transaction application selector function filters a list of said plurality of payment applications based on one or more payment brands and/or payment solutions accepted by a merchant.

According to one embodiment, the memory further stores a merchant application configured to initiate a transaction request using said generic application calling code.

According to one embodiment, the generic URL is provided by the merchant application in the form of at least one of: a URL-intent; a QR (quick response) code; and an RF data transmission.

According to one embodiment, the transaction request is a payment request comprising an indication of said one or more payment brands and/or payment types accepted by the merchant.

According to one embodiment, the transaction request further comprises a transaction identifier generated by a merchant server.

According to one embodiment, the transaction request further comprises an identifier of said merchant server to be used during the processing of said electronic transaction, wherein the identifier is for example a URL.

According to one embodiment, the transaction request further comprises a call back request such that said merchant application is called once said electronic transaction has been processed.

According to a further aspect, there is provided an electronic transaction system comprising: the above mobile device; a merchant server; and a transaction application server in communication with the merchant server and the mobile device.

According to a further aspect, there is provided a method of performing an electronic transaction using a mobile device comprising: calling a first of a plurality of transaction applications, stored in a memory of said mobile device, based on a generic application calling code, which is for example a generic URL (universal resource locator) associated with each of the transaction applications; implementing by the first transaction application a universal transaction application selector function that displays on a display of said mobile device a choice between two or more of said transaction applications and calls, based on an input from a user of the mobile device, a selected one of said two or more transaction applications using an application specific calling code, which is for example an application specific URL, associated with the selected transaction application; and processing the electronic transaction using said mobile device.

According to one embodiment, the method further comprises, prior to calling the first transaction application, generating by a merchant application a transaction request to an operating system of the mobile device, the transaction request comprising the generic application calling code.

According to one embodiment, the first transaction application is called by the operating system based on the transaction request.

According to one embodiment, calling the first transaction application comprises: in response to the transaction request, displaying on a display of the mobile device by the operating system a choice between the plurality of transaction applications; receiving a selection by the user of the first transaction application; calling the first transaction application using an application specific URL of the first transaction application; and determining that the first transaction application cannot process the electronic transaction.

According to one embodiment, calling the first transaction application is based on a URL-intent or a QR (quick response) code provided by a merchant application.

According to one embodiment, the method further comprises determining by the selected transaction application whether or not it is capable of processing the electronic transaction, wherein: if the selected transaction application is determined to be capable of processing the electronic transaction, the electronic transaction is processed by the selected transaction application; and if the selected transaction application is determined not to be capable of processing the electronic transaction, the method further comprises implementing by the selected transaction application the universal transaction application selector function to display on the display of the mobile device a choice between two or more of said transaction applications other than the selected transaction application and to call, based on an input from a user of the mobile device, a further selected one of the two or more transaction applications using an application specific calling code, which is for example an application specific URL, associated with the further selected transaction application; and processing the electronic transaction by the further selected transaction application.

According to one embodiment, the electronic transaction is at least one of: an electronic payment; the establishment of a direct payment facility; document or contract signature; data verification; and authentication check of the mobile device or of a user of the mobile device.

### BRIEF DESCRIPTION OF THE DRAWINGS

The foregoing and other features and advantages will become apparent from the following detailed description of embodiments, given by way of illustration and not limitation with reference to the accompanying drawings, in which:
Figure 1 schematically illustrates a mobile device and a transaction element according to an example embodiment of the present disclosure;
Figure 2 schematically illustrates the mobile device of Figure 1 in more detail according to an example embodiment of the present disclosure;
Figure 3 is a flow diagram illustrating operations in a method of performing an electronic transaction using a mobile device according to an example embodiment of the present disclosure;
Figure 4 schematically illustrates an electronic transaction system according to an example embodiment of the present disclosure;
Figure 5 is a flow diagram illustrating operations in a method of performing an electronic transaction using a mobile device according to a further example embodiment of the present disclosure; and
Figure 6 illustrates a merchant or payment application server of Figure 4 in more detail according to an example embodiment of the present disclosure.

### DETAILED DESCRIPTION

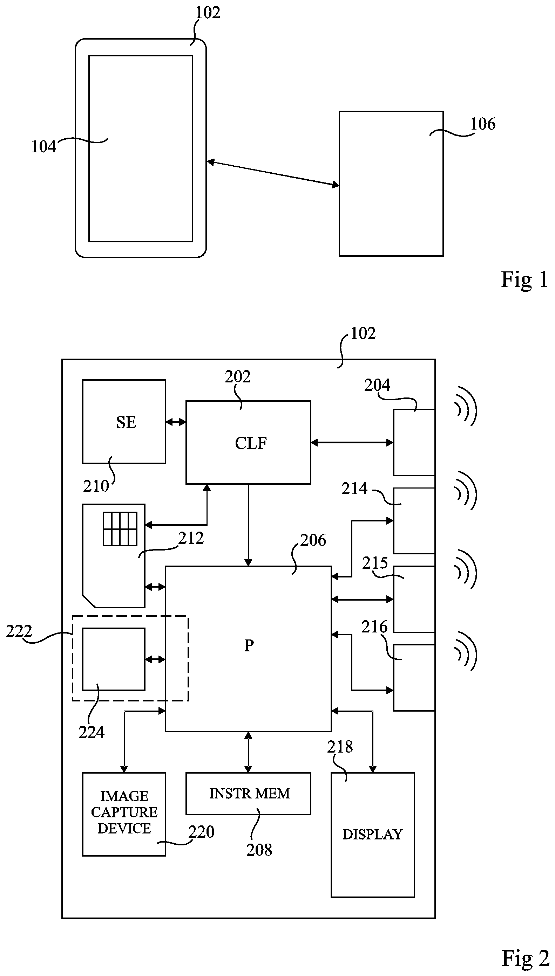

Figure 1 schematically illustrates a mobile device 102 capable of wireless communications, and of performing an electronic transaction. For example, the mobile device 102 is a mobile telephone, smart phone, tablet computer, digital media player or the like, and comprises a display 104, for example a touch screen.

The mobile device 102 is shown in communication with a transaction element 106. In some embodiments, the communication between the mobile device 102 and the transaction element is at least partially via a wireless interface, such as an NFC interface, a wireless data connection via a telecommunications network, a Bluetooth interface or a wireless local area network (WLAN) .

Alternatively, the transaction element 106 may communicate with the mobile device 102 using a camera of the mobile device 102. For example, the transaction element 106 may comprise a display for displaying a barcode such as a QR-code (quick response code), which may be captured by the camera and interpreted using a suitable application loaded on the mobile device 102.

In alternative embodiments, the transaction element 106 could be incorporated within the mobile device 102. For example, the mobile device 102 may store and run a merchant application implementing the transaction element 106.

In such a case, the transaction element 106 for example communicates with other circuitry of the mobile device by generating an intent, such as a URL-intent (universal resource locator-intent). As will be known by those skilled in the art, an intent is a digital message passed from an application being run on a mobile device to the operating system of the mobile device, that causes a certain application to be called, and passes information, such as a parameter, to that application.

In some embodiments, the electronic transaction is an electronic payment, and the transaction element 106 is a payment terminal. Alternatively, the electronic transaction could be any of a range of electronic services provided between the mobile device 102 and the transaction element 106, such as an electronic payment, including a card payment or non-card payment, the establishment of a direct payment facility such as an E-mandate, document or contract signature, data verification, such as an address or age check, and/or authentication check of the mobile device or of a user of the mobile device. An E-mandate is for example an agreement authorizing a merchant to receive one or more direct debit payments from a customer.

The transaction element 106 is for example positioned at an entry barrier of a restricted area, such as a transport network, or at a point of sale in a shop or restaurant. In such cases, the mobile device 102 is for example in relatively close proximity to the transaction element 106, and the communication between the mobile device and the transaction element is for example by NFC, the mobile device emulating a wireless transponder. Alternatively, other forms of wireless communication between the mobile device 102 and the transaction element 106 would be possible, such as a wireless connection via Bluetooth or via a wireless local area network (WLAN).

In other embodiments, the mobile device 102 could be remote from the transaction element 106, and the communication between the mobile device and the transaction element could be via one or more intervening networks, such as a data network of a telecommunications network and/or the internet. In such a case, the transaction element could correspond to a remote server, for example hosting a website of a merchant.

Figure 2 schematically illustrates the mobile device 102 in more detail according to an example embodiment.

As illustrated in Figure 2, the mobile device 102 for example comprises a contactless front-end integrated circuit (CLF) 202, which will be referred to herein as an NFC router. The NFC router 202 is coupled to an NFC antenna 204, and together the router 202 and antenna 204 provide NFC circuitry for emulating the behaviour of an NFC transponder.

The NFC router 202 is also for example coupled to a host processing device (P) 206 of the mobile device 102. The processing device 206 for example comprises one or more processors under the control of instructions stored in an instruction memory (INSTR MEM) 208. The NFC router 202 is also for example coupled to a secure element (SE) 210, which is for example an embedded SE (eSE), and/or to a SIM or universal SIM circuit 212. The circuit 212 is for example additionally coupled to the processing device 206. Additionally or alternatively, the processing device 206 may perform host card emulation (HCE), meaning that NFC communications are routed to the host processing device 206, which emulates the behaviour of an NFC secure element. This permits secure NFC transactions to be performed directly by the processing device 206 without requiring the presence of a secure element within the mobile device 102.

The processing device 206 is also for example coupled to: an antenna 214 permitting telecommunications within a cellular network; to an antenna 215 permitting wi-fi (wireless fidelity) communications; and/or to an antenna 216 permitting ultra wideband (UWB) RF communications. In some embodiments, the mobile device 102 may comprise only one or some of the antennas 214, 215 and 216. The mobile device 102 further comprises a display (DISPLAY) 218 coupled to the processing device 206, the display for example being a touch screen providing a user interface of the mobile device.

The mobile device 102 also for example comprises an image capture device (IMAGE CAPTURE DEVICE) 220, comprising an image sensor for capturing digital images. For example, the image capture device 220 is capable of capturing machine-readable codes such as QR-codes, and the mobile device 102 stores a suitable software application for interpreting the machine readable code. Furthermore, in some embodiments, the image capture device 220 or a separate image sensor is capable of capturing biometric samples such as a finger print, facial image, finger vein or retina scan.

In some embodiments, the mobile device 102 comprises a trusted execution environment (TEE) 222 that for example comprises a memory device 224 storing one or more software applications and an allocation of the processing resources of the processing device 206 for execution of the software applications in isolation from the execution of other software applications stored in the instruction memory. For example, the trusted executed environment 222 is used for the execution of sensitive software applications, such as an application for PIN (personal identification number) entry and/or for capturing a biometric sample.

As will be described in more detail below, the mobile device 102 is for example a connected mobile device, having some or all of the following characteristics:
- portable, with no need to be permanently connected to any kind of cable, including a power supply cable or data cable;
- capable of receiving and/or processing the data of a token (described in more detail below) comprising a URL (universal resource locator) and transaction-related data;
- capable of implementing authentication, for example based on one or more of: a software token, for example managed by an authentication application of the mobile device; a hardware token, for example forming part of the secure element; a user biometric measurement, for example an image of the user's face or fingerprint; and a user secret, for example a PIN (personal identification number) or Password;

- capable of displaying transaction/service data for the user; and
- capable of registering a user acceptance or agreement.

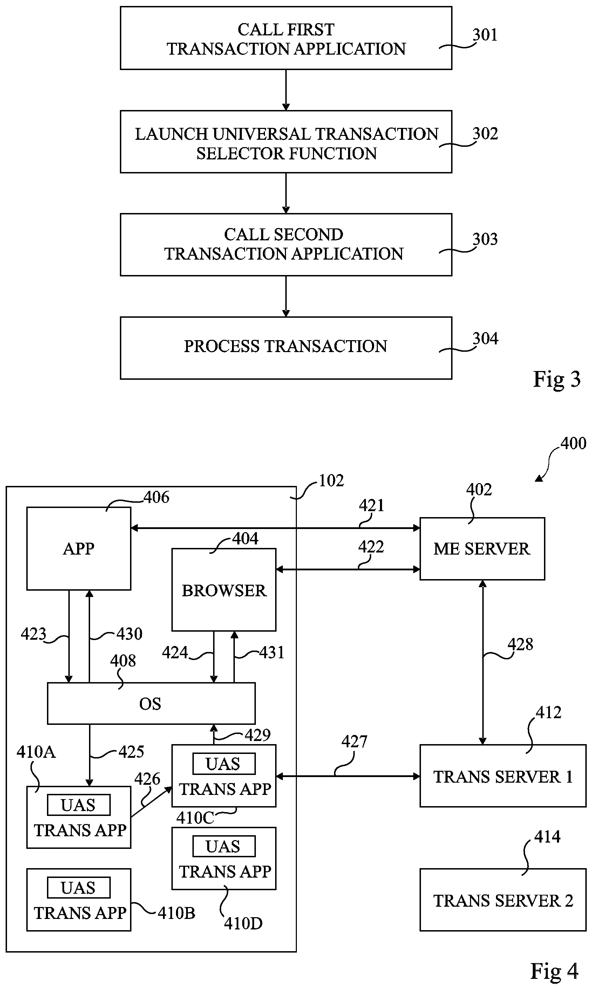

Figure 3 is a flow diagram illustrating an example of operations in a method of performing an electronic transaction using the mobile device 102. It is assumed that the mobile device has stored on it a plurality of transaction applications, each for example permitting a transaction corresponding to a different brand and/or transaction type. Furthermore, it is assumed that each transaction application is capable of being launched by an application specific calling code, which is for example a URL associated with the particular transaction application, and a generic application calling code, which is for example a URL associated with all of the transaction applications. While throughout the following description examples are described based on calling codes in the form of URLs, it will be apparent to those skilled in the art that in alternative embodiments, the application specific calling code and the generic application calling code could be based on alternative calling mechanisms.

In a first operation 301, a first of the plurality of transaction applications is called for example based on the generic URL.

In a subsequent operation 302, a universal transaction selector function is launched by the first transaction application. This function for example displays on the display 218 of the mobile device a list of the available transaction applications stored on the mobile device, giving the user a choice between two or more transaction applications. The first transaction application may be included on the list.

In a subsequent operation 303, a second transaction application is selected by a user input, and this second application is called by the application specific URL associated with the selected transaction application.

In a subsequent operation 304, the electronic transaction is processed by the mobile device, for example by the second transaction application selected by the user. Alternatively, it may be that the second transaction application selected by the user is not capable of processing the electronic transaction, in which case the second transaction application for example launches the universal transaction selector function without listing the second transaction application on the list of available applications.

Figure 4 schematically illustrates an electronic transaction system 400 comprising the mobile device 102 in communication with a merchant server (ME SERVER) 402 and adapted to perform a payment transaction. However, it will be apparent to those skilled in the art that the system of Figure 4 could be adapted to other types of electronic transactions, and the merchant server could be a different type of server.

As illustrated in Figure 4, the mobile device 102 for example stores in its instruction memory a browser (BROWSER) 404, and/or a merchant application (APP) 406, each capable of communicating with the merchant server 402. These software applications for example provide two means by which the merchant is able to support mobile shopping. The browser 404 is for example opened by a user of the mobile device, and used to navigate to an internet site of the merchant. The merchant application 406 is for example installed on the mobile device by the user, and permits an enhanced web page to be viewed, which is for example partially generated on the mobile device, and partially generated based on data received from a distant webserver, such as the merchant server 402. The combination of the merchant server 402 and the browser 404 and/or merchant application 406 for example provides the transaction terminal 106 of Figure 1 used to initiate a transaction.

The browser 404 and merchant application 406 for example communicate with the operating system (OS) 408 of the mobile device 102.

The mobile device 102 also for example stores in its instruction memory a plurality of payment-capable applications, referred to herein as transaction applications. In the example of Figure 4, there are four such applications (TRANS APP) 410A to 410D. Each of the transaction applications is for example one of the following:
- a mobile banking application, possibly offering payment under different brands and different payment technologies (card, S€PA credit transfer...);
- a mobile wallet application, offering several card brands, with multibank support, and possibly the support of several payment technologies (3DSecure, proprietary solutions, HTTPS push to payment solution provider as used by wallets, etc.);
- a brand-specific and/or bank-specific payment application.

Each of the transaction applications 410A to 410D for example comprises a universal application selector (UAS), which provides a technical solution for supporting URL calls registered by a plurality of transaction applications. A URL-Intent (Android) and URL-Schemes (iOS) are the methods offered by mobile operating systems to permit inter-application calls. Throughout the following, such inter-application calls will be referred to simply as URL calls. A very straightforward intro can be found here: http://blogs.telerik.com/appbuilder/posts/13-08-26/how-to-use-custom-url-schemes. The URL Intent mechanism provides a standardised way to launch, from the browser 404 or merchant application 406, a transaction application from a URL in case that the same device is used for shopping and payment. However, it will be apparent to those skilled in the art that, rather than using a URL Intent or URL-Schemes, other types of inter-application calling mechanisms could be used.

The UAS for example registers two URLs: a fixed URL for the UAS, for example: UPS_GenApp://DoTx; and a specific URL for the transaction application, for example: UAS_"Payment Solution Name"://DoTx.

A common list of technical payment solutions is for example universally accessible by the mobile device 102, such as via a website. This list for example indicates, for each payment solution, a list of acceptance brands, which are the brands of payment supported by the payment solution.

Table I below provides an example of a list of acceptance payment brands, indicated by an acceptance name, e.g. a card scheme brand such as Visa (the names "Maestro", "Visa", "MasterCard" and "JCB" used in the table may correspond to registered trademarks). Furthermore, for each payment brand, a type of payment associated with each brand is for example provided, such as any (group), debit, credit, S€PA credit transfer (SCT). Furthermore, the table for example includes a brand identifier for each brand, which is represented for example coded as 2 bytes (represented in hexadecimal format in the table), allowing 2¹⁶ payment brands to be registered.

**Table I**

| **Acceptance Name** | **Type** | **Brand ID** |
|---|---|---|
| Any supported by Payment App | Any | 0000 |
| BC/MC | Debit | 0001 |
| Maestro | Debit | 0002 |
| Any Debit | Any | 0003 |
| Any Credit | Any | 0004 |
| Visa | Credit | 0005 |
| MasterCard | Credit | 0006 |
| JCB | Credit | 0007 |
| Bank Transfer | SCT | 0008 |

Table II below provides an example of a list of technical payment solutions, indicated by a name of the payment service, for example the wallet provider (the names "SIXDots", "MasterPass" and "V.ME" may correspond to registered trademarks). Furthermore, for each payment solution, the table for example includes an example of the application URL scheme, which is the generic URL, such as UAS_"Payment Solution Name", a payment solution identifier, for example of 3 bytes (represented in hexadecimal format in the table), allowing 2²⁴ payment methods to be registered, and a list of the brand identifiers of brands supported by the payment solution.

**Table II**

| Technical Payment Solution Name | App URL Scheme | Payment Solution ID | Supported Brand(s) |
|---|---|---|---|
| Any that supports the brand | Any | 000000 | All |
| BCMC_Standalone | BCMC_Standalone | 000001 | 0001 |
| BCMC_KBC | BCMC_KBC | 000002 | 0001, 0008 |
| SIXDots | SIXDOTS | 000003 | 0001,0002,0003,0004 |
| | | | 0005, 0006, 0007 |
| MasterPass | MPass | 000004 | 0002,0003,0004,0005 |
| | | | 0006, 0007 |
| V.ME | VME | 000005 | 0002, 0003, 0004 |
| | | | 0005, 0006, 0007 |

Each merchant for example indicates one or more payment methods that are accepted, the payment method for example being defined by a combination of a Brand ID and a Technical Payment Solution ID. For example, a merchant accepting BC-MC and SixDots may represent this as follows:
0000 000003 (i.e. any brand supported by transaction application, and the SixDots payment solution); and
0001 000000 (i.e. the BC-MC brand, and any BC-MC transaction application).

Each of the transaction applications 410A to 410D is for example associated with a transaction server, two of which are shown in example of Figure 4 labelled (TRANS SERVER 1) 412 and (TRANS SERVER 2) 414.

A method of performing a transaction using the mobile device 102 will now be described in more detail with reference to numbered arrows in Figure 4.

It is assumed that a transaction has been initiated by a user of the mobile device 102, for example during shopping via the browser 404 or merchant application 406 of the mobile device.

As represented by arrows 421 and 422 in Figure 4, the merchant server 402 is for example informed of the transaction request and prepares a universal transaction call. In particular, the merchant server 402 for example generates a universal transaction call having a generic URL, and with related parameters including a unique secure Transaction ID.

For example, the universal transaction call comprises one or more of: an indication of one or more supported payment methods; a merchant URL or web address of the merchant server 402 allowing the transaction server 412 or 414 to contact the merchant to get the transaction details; and the transaction ID, which is for example in the form of a string sent by the merchant allowing it to retrieve the transaction details. In some embodiments, the universal transaction call may further comprise at least some of the transaction details, such as the payment amount in the case that the transaction is a payment, and/or merchant information relating to the transaction. Furthermore, in some embodiments, the generic URL-intent may also comprise a callback URL allowing the transaction application to automatically call again the browser 404 or merchant application 406 after completing the transaction. For example, the callback URL for a merchant application could be of the form: "MeApp_name"://result), where "MeApp_name" is the name of the merchant application, and the callback URL for a merchant webpage accessed using the browser 404 could be of the form: UAS_GenApp://DoTx&PayList=0001000000&MEURL=www.merchant.com&Tran sId=Z7Z5VF6EUHTVQMOBZJHW5HCP&Callbak=MeAppXX://result, where www.merchant.com is the webpage of the merchant application.

In one example, the universal transaction call is transmitted in the form of an electronic token. In some embodiments the token may comprise a secure identifier, allowing the token to be authenticated by the mobile device 102 and/or by the transaction server 412 or 414. The token is for example transmitted to the mobile device via Bluetooth, NFC, Ultra-wideband and/or other RF technologies. In some cases, the token is in the form of a URL-intent. Alternatively, the token may for example be in the form of a QR (quick response) code, which can be decoded by an appropriate application stored on the mobile device 102. For example, the QR code could be captured by the mobile device by taking an image of a display of a transaction terminal on which is displayed the QR code generated by the merchant server 402.

The universal transaction call is transmitted to the browser 404 or merchant application 406 that initiated the transaction.

As represented by arrows 423 and 424, the merchant application 406 or browser 404 then launches the universal transaction call, using the generic URL provided by the merchant server 402. This then causes the operating system 408 to wake one of the transaction applications 410A to 410D. The selection of the transaction application 410A to 410D to be woken depends for example on the type of operating system 408.

In the case that the operating system is iOS, any of the transaction applications capable of being called by the generic URL-scheme is for example opened, and may be determined by user preferences.

In the case that the operating system is Android, Windows 8 or the like, the operating system 408 for example displays a list of applications that are capable of being called by the generic URL-intent, and prompts the user of the mobile device 102 to make a selection among these applications.

In the example of Figure 4, as represented by an arrow 425, it is assumed that the transaction application 410A is called. The transaction application 410A is for example called using the registered generic URL, with the secure transaction ID, and optionally a callback URL.

The universal application selector (UAS) of the transaction application 410A is then launched. For example, in the case of an iOS operating system, the UAS is launched directly. In the case of an Android, Windows 8 or similar operating system, it is assumed that the user already selected the transaction application 410A, and if this transaction application is capable of processing the transaction, it will do so. However, in the case that the application 410A is not capable of processing the transaction, for example due to an incompatible payment brand or technical payment solution, the UAS is launched.

The UAS for example determines, based on a payment type associated with the merchant, such as the permitted brand and/or technical payment solution, a list of transaction applications capable of processing the transaction. For example, a list of the transaction applications is stored locally by each of the transaction applications, and the transaction applications periodically verify whether there are any updates to the list, for example by a comparison with a list stored centrally by a webserver. Brands and/or payment solutions that are not supported by the merchant are for example filtered out. Furthermore, any application that has previously been found to be unsupported is also for example filtered out. In some embodiments, the operating system 408 is called to verify that each application on the list is indeed installed on the mobile device. Any application that is not installed is removed from the list.

Once the list of transaction applications has been generated, it is displayed on the display of the mobile device, for example in the form of a brand-neutral page, in other words no brand is displayed in a preferential fashion to the others. The user is prompted to make a selection among the transaction applications. For example, the list of transaction applications is displayed by showing on the display an icon associated with each application/brand. Alternatively, in some cases, only a single application may have been identified as supporting the payment type, and in such a case, this application is for example automatically selected.

In the example of Figure 4, the application 410C is selected, and this application is called using its associated application specific URL. The data provided with the generic application call, such as the transaction ID and the callback URL if present, is also forwarded to the selected transaction application. Calling the transaction application using its specific URL for example causes the application to process the transaction without launching the UAS.

It is then checked that the selected transaction application is capable of processing the transaction, for example by verifying at least that the application is correctly enrolled, that it has not been blocked, that the brand of payment is supported, and/or that the payment method is supported.

If so, the transaction is processed by the transaction application. As shown by the arrow 427, this for example involves communicating the transaction ID to the transaction server corresponding to the selected application, which in this example is the transaction server 412. Furthermore, as represented by an arrow 428, the transaction server 412 for example interacts with the merchant server 402. As indicated above, the merchant server 402 is for example identified by a URL of the merchant server that was included in the universal transaction call. The transaction server 412 provides the transaction ID to the merchant server 402, and receives in response the corresponding transaction details.

Authentication is also for example applied by the transaction application 410C and/or transaction server 412.

Once authentication has been performed, and the transaction has been completed, the server 412 for example provides a confirmation message to the transaction application 410C. In the case that a call back URL was provided, this URL is then launched to return control to the merchant application 406 or browser 404. Alternatively, the user for example switches manually to the calling application.

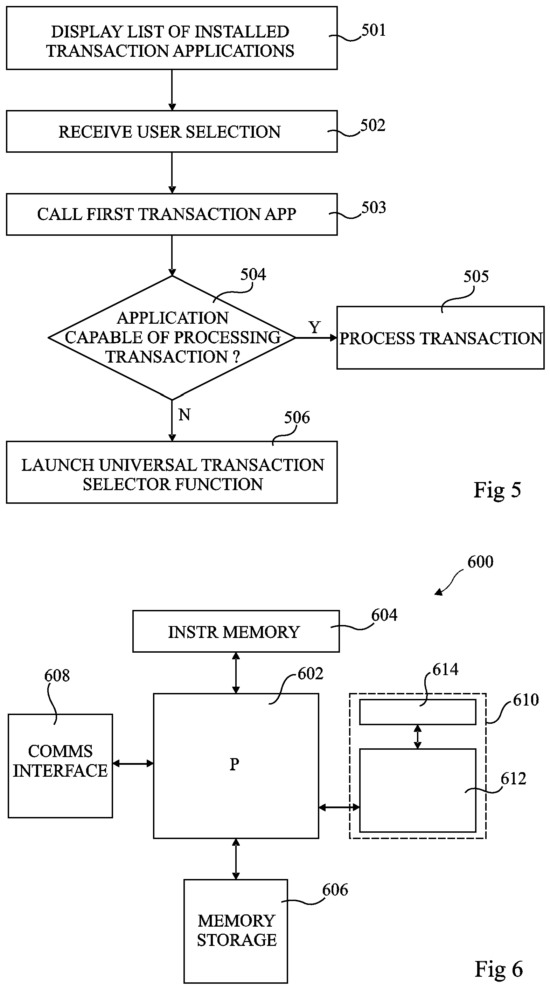

Figure 5 is a flow diagram illustrating the operations 301 and 302 of Figure 3 in more detail according to an example in which the operating system of the mobile device 102 is Android, Windows 8 or the like.

In an operation 501, following the calling of the generic URL, a corresponding list of installed transaction applications is displayed on the mobile device 102.

In a subsequent operation 502, a user selection is received, and the user selects the first transaction application of operation 301 of Figure 3.

In a subsequent operation 503, the first transaction application is called using the generic URL.

In a subsequent operation 504, it is determined whether or not the first transaction application is capable of processing the transaction. If so, the transaction is processed by the first transaction application in an operation 505. If not, the next operation is 506.

In operation 506, the universal transaction selector function of the first transaction application is launched.

Figure 6 schematically represents a device 600 that could be used for implementing the merchant server 402 and/or any of the transaction servers 412, 414 of Figure 4.

The device 600 for example comprises a processing device 602, which may comprise one or more processors, under the control of instructions stored in an instruction memory 604.

A memory storage device 606 is also coupled to the processing device 602, and for example stores the transaction identifier in association with the transaction data. The processing device 602 is also coupled to a communication interface 608, which permits communications, via a wired and/or wireless network, with the mobile device 102, ME server 402, and/or transaction server 412, 414.

In some embodiments, the device 600 comprises a secure processing environment 610, which for example comprises a secure microprocessor 612, under the control of an instruction memory 614, storing one or more software applications that can be executed in isolation from the execution of other software applications stored in the instruction memory 604. For example, the secure processing environment 610 is used for the execution of sensitive software applications, such as an application for encrypting communications, and/or for the verification of sensitive data such as biometric data or a PIN.

An advantage of the embodiments described herein is that they provide a universal solution that can be deployed once by any merchant and provides a common acceptance solution for a variety of merchants and payment providers.

Furthermore, the described embodiments include one or more of the following advantages: a solution that, for payment transactions, is multi-brand, multi-solution and/or multi-method; a solution that is generic enough so that different technical payment solutions can be triggered by a single call; a solution that for example allows the merchant to define a list of payment methods, brands and/or solutions that are accepted by the merchant; a solution that for example filters out the transaction applications offering payment methods, brands and/or solutions that are not supported by the merchant; a solution that for example limits the impact on the merchant application, there being potentially thousands of available merchant applications; a solution that is for example universal in terms of mobile phone OS.

## Claims

1. A mobile device comprising:
a memory (208) storing a plurality of payment applications (410A to 410D), wherein each payment application is configured to be capable of being called by a generic application calling code and by an application specific calling code, wherein the generic application calling code is a generic URL (universal resource locator) and the application specific calling code is an application specific URL, each payment application being further configured:
when called by the generic application URL, to implement a universal payment application selector function that displays on a display (218) of the mobile device a choice between two or more of the payment applications, and calls, based on an input from a user of the mobile device, one of said two or more payment applications using one of the application specific URLs; and
when called by the application specific URL, to process an electronic payment using the mobile device.

2. The mobile device of claim 1, wherein said universal payment application selector function filters a list of said plurality of payment applications based on one or more payment brands and/or payment solutions accepted by a merchant.

3. The mobile device of claim 1 or 2, wherein said memory (208) further stores a merchant application (406) configured to initiate a transaction request using said generic application URL.

4. The mobile device of claim 3, wherein the generic application URL is provided by the merchant application (406) in the form of at least one of:
a URL-intent;
a QR (quick response) code; and
an RF data transmission.

5. The mobile device of claim 3 or 4 when dependent on claim 2, wherein said transaction request is a payment request comprising an indication of said one or more payment brands and/or payment types accepted by the merchant.

6. The mobile device of any of claims 3 to 5, wherein said transaction request further comprises:
a transaction identifier generated by a merchant server (402); and an identifier of said merchant server (402) to be used during the processing of said electronic payment.

7. An electronic payment system comprising:
the mobile device (102) of any of claims 1 to 6;
a merchant server (402); and
a payment application server (412) in communication with the merchant server (402) and the mobile device (414).

8. A method of performing an electronic payment using a mobile device (102) comprising:
calling a first of a plurality of payment applications (410A to 410D), stored in a memory (208) of said mobile device (102), based on a generic application URL associated with each of the payment applications;
implementing by the first payment application, in response to being called by the generic application calling code, a universal payment application selector function that displays on a display (218) of said mobile device a choice between two or more of said payment applications and calls, based on an input from a user of the mobile device, a selected one of said two or more payment applications using an application specific calling code associated with the selected payment application, wherein the generic application calling code is a generic URL (universal resource locator) and the application specific calling code is an application specific URL; and
in response to being called by the application specific URL, processing by the selected payment application the electronic payment using said mobile device (102).

9. The method of claim 8, further comprising, prior to calling the first payment application, generating by a merchant application (406) a transaction request to an operating system (408) of said mobile device (102), the transaction request comprising said generic application URL.

10. The method of claim 9, wherein said first payment application is called by said operating system (408) based on said transaction request.

11. The method of claim 9, wherein calling said first payment application comprises:
in response to said transaction request, displaying on a display (218) of said mobile device (102) by said operating system (408) a choice between said plurality of payment applications;
receiving a selection by the user of said first payment application;
calling the first payment application using an application specific URL of the first payment application; and
determining that the first payment application cannot process the electronic payment.

12. The method of any of claims 8 to 11, further comprising determining by the selected payment application whether or not it is capable of processing the electronic payment, wherein:
if the selected payment application is determined to be capable of processing the electronic payment, the electronic payment is processed by the selected payment application; and
if the selected payment application is determined not to be capable of processing the electronic payment, the method further comprises implementing by the selected payment application the universal payment application selector function to: display on the display (218) of the mobile device (102) a choice between two or more of said payment applications other than the selected payment application; and call, based on an input from a user of the mobile device (102), a further selected one of said two or more payment applications using an application specific URL associated with the further selected payment application; and
processing the electronic payment by the further selected payment application.

## Patentansprüche

1. Ein mobiles Gerät, das Folgendes aufweist:
einen Speicher (208), der eine Vielzahl von Zahlungsanwendungen (410A bis 410D) speichert, wobei jede Zahlungsanwendung konfiguriert ist, um in der Lage zu sein durch einen generischen Aufrufcode für Anwendungen und durch einen anwendungsspezifischen Aufrufcode aufgerufen zu werden, wobei der generische Aufrufcode für Anwendungen eine generische URL (Universal Resource Locator) ist und der anwendungsspezifische Aufrufcode eine anwendungsspezifische URL ist, wobei jede Zahlungsanwendung ferner konfiguriert ist:
wenn sie durch die generische Anwendungs-URL aufgerufen wird, zum Implementieren einer universellen Auswahlfunktion für Zahlungsanwendungen, die auf einem Display (218) des mobilen Geräts eine Auswahl zwischen zwei oder mehr der Zahlungsanwendungen anzeigt und basierend auf einer Eingabe von einem Benutzer des mobilen Geräts eine der zwei oder mehr Zahlungsanwendungen aufruft, und zwar unter Verwendung einer der anwendungsspezifischen URLs; und
wenn sie durch die anwendungsspezifische URL aufgerufen wird, zum Verarbeiten einer elektronischen Zahlung unter Verwendung des mobilen Geräts.

2. Das mobile Gerät nach Anspruch 1, wobei die universelle Auswahlfunktion für Zahlungsanwendungen eine Liste der Vielzahl von Zahlungsanwendungen filtriert, und zwar basierend auf einer oder mehreren Zahlungsmarken und/oder Zahlungslösungen, die von einem Händler akzeptiert werden.

3. Das mobile Gerät nach Anspruch 1 oder 2, wobei der Speicher (208) ferner eine Händleranwendung (406) speichert, die konfiguriert ist zum Initiieren einer Transaktionsanforderung unter Verwendung der generischen Anwendungs-URL.

4. Das mobile Gerät nach Anspruch 3, wobei die generische Anwendungs-URL von der Händleranwendung (406) bereitgestellt wird in Form von wenigstens einem der folgenden:
einer URL-Absicht;
einem ODER-Code (Quick Response); und
einer HF-Datenübertragung.

5. Das mobile Gerät nach Anspruch 3 oder 4, in Abhängigkeit von Anspruch 2, wobei die Transaktionsanforderung eine Zahlungsanforderung ist, die eine Angabe der einen oder mehreren Zahlungsmarken und/oder Zahlungstypen aufweist, die vom Händler akzeptiert werden.

6. Das mobile Gerät nach einem der Ansprüche 3 bis 5, wobei die Transaktionsanforderung ferner Folgendes aufweist:
eine Transaktionskennung, die von einem Händlerserver (402) generiert wird; und
eine Kennung des Händlerservers (402), die während der Verarbeitung der elektronischen Zahlung verwendet wird.

7. Ein elektronisches Zahlungssystem, das Folgendes aufweist:
das mobile Gerät (102) nach einem der Ansprüche 1 bis 6;
einen Händlerserver (402); und
einen Zahlungsanwendungsserver (412), der mit dem Händlerserver (402) und dem mobilen Gerät (414) in Verbindung steht.

8. Ein Verfahren zum Durchführen einer elektronischen Zahlung unter Verwendung eines mobilen Geräts (102), wobei das Verfahren Folgendes aufweist:
Aufrufen einer ersten einer Vielzahl von Zahlungsanwendungen (410A bis 410D), die in einem Speicher (208) des mobilen Geräts (102) gespeichert sind, basierend auf einer generischen Anwendungs-URL, die mit jeder der Zahlungsanwendungen assoziiert ist;
Implementieren durch die erste Zahlungsanwendung, ansprechend auf Aufgerufen-Werden durch den generischen Aufrufcode für Anwendungen, einer universellen Auswahlfunktion für Zahlungsanwendungen, die auf einem Display (218) des mobilen Geräts eine Auswahl anzeigt, zwischen zwei oder mehr der Zahlungsanwendungen, und, basierend auf einer Eingabe eines Nutzers des mobilen Geräts, eine ausgewählte der zwei oder mehr Zahlungsanwendungen aufruft unter Verwendung eines anwendungsspezifischen Aufrufcodes, der mit der ausgewählten Zahlungsanwendung assoziiert ist, wobei der generische Aufrufcode für die Anwendung eine generische URL (Universal Resource Locator) ist und der anwendungsspezifische Aufrufcode eine anwendungsspezifische URL ist; und
ansprechend auf Aufgerufen-Werden durch die anwendungsspezifische URL, Verarbeiten, durch die ausgewählte Zahlungsanwendung, der elektronischen Zahlung unter Verwendung des mobilen Geräts (102).

9. Das Verfahren nach Anspruch 8, ferner aufweisend, vor dem Aufrufen der ersten Zahlungsanwendung, Generieren durch eine Händleranwendung (406) einer Transaktionsanforderung an ein Betriebssystem (408) des mobilen Geräts (102), wobei die Transaktionsanforderung die generische Anwendungs-URL aufweist.

10. Das Verfahren nach Anspruch 9, wobei die erste Zahlungsanwendung durch das Betriebssystem (408) auf der Grundlage der Transaktionsanforderung aufgerufen wird.

11. Das Verfahren nach Anspruch 9, wobei Aufrufen der ersten Zahlungsanwendung Folgendes aufweist:
Ansprechend auf die Transaktionsanforderung, Anzeigen auf einem Display (218) des mobilen Geräts (102) durch das Betriebssystem (408) einer Auswahl zwischen der Vielzahl von Zahlungsanwendungen;
Empfangen einer Auswahl der ersten Zahlungsanwendung durch den Benutzer; Aufrufen der ersten Zahlungsanwendung unter Verwendung einer anwendungsspezifischen URL der ersten Zahlungsanwendung; und
Bestimmen, dass die erste Zahlungsanwendung die elektronische Zahlung nicht verarbeiten kann.

12. Das Verfahren nach einem der Ansprüche 8 bis 11, ferner aufweisend Bestimmen durch die ausgewählte Zahlungsanwendung, ob sie in der Lage ist, die elektronische Zahlung zu verarbeiten, wobei:
wenn bestimmt wird, dass die ausgewählte Zahlungsanwendung in der Lage ist, die elektronische Zahlung zu verarbeiten, die elektronische Zahlung durch die ausgewählte Zahlungsanwendung verarbeitet wird; und
wenn bestimmt wird, dass die ausgewählte Zahlungsanwendung nicht in der Lage ist, die elektronische Zahlung zu verarbeiten, das Verfahren ferner Implementieren aufweist, durch die ausgewählte Zahlungsanwendung, und zwar der universellen Auswahlfunktion für Zahlungsanwendungen, zum: Anzeigen auf dem Display (218) des mobilen Geräts (102) einer Auswahl zwischen zwei oder mehr der Zahlungsanwendungen, die nicht die ausgewählte Zahlungsanwendung sind; und
Aufrufen, basierend auf einer Eingabe eines Nutzers des mobilen Geräts (102), einer weiteren ausgewählten der zwei oder mehr Zahlungsanwendungen unter Verwendung einer anwendungsspezifischen URL, die mit der weiteren ausgewählten Zahlungsanwendung verknüpft ist; und
Verarbeiten der elektronischen Zahlung durch die weitere ausgewählte Zahlungsanwendung.

## Revendications

1. Dispositif mobile comprenant :
une mémoire (208) stockant une pluralité d'applications de paiement (410A à 410D), dans lequel chaque application de paiement est configurée pour pouvoir être appelée par un code d'appel d'application générique et par un code d'appel spécifique à l'application, dans lequel le code d'appel d'application générique est une URL (localisation de ressources uniforme) générique et le code d'appel spécifique à l'application est une URL spécifique à l'application, chaque application de paiement étant en outre configurée :
lorsqu'elle est appelée par l'URL d'application générique, pour mettre en œuvre une fonction de sélection d'application de paiement uniforme qui affiche sur un écran (218) du dispositif mobile un choix entre deux des applications de paiement ou plus, et appelle, sur la base d'une entrée d'un utilisateur du dispositif mobile, l'une desdites deux applications de paiement ou plus en utilisant l'une des URL spécifiques à l'application ; et
lorsqu'elle est appelée par l'URL spécifique à l'application, pour traiter un paiement électronique à l'aide du dispositif mobile.

2. Dispositif mobile selon la revendication 1, dans lequel ladite fonction de sélection d'application de paiement uniforme filtre une liste de ladite pluralité d'applications de paiement sur la base d'une ou de plusieurs marques de paiement et/ou solutions de paiement acceptées par un commerçant.

3. Dispositif mobile selon la revendication 1 ou 2, dans lequel ladite mémoire (208) stocke en outre une application marchande (406) configurée pour déclencher une demande de transaction à l'aide de ladite URL d'application générique.

4. Dispositif mobile selon la revendication 3, dans lequel l'URL d'application générique est fournie par l'application marchande (406) sous la forme d'au moins l'un parmi :
une intention d'URL ;
un code QR (réponse rapide) ; et
une transmission de données RF.

5. Dispositif mobile selon la revendication 3 ou 4 lorsqu'elle dépend de la revendication 2, dans lequel ladite demande de transaction est une demande de paiement comprenant un desdits une ou plusieurs marques de paiement et/ou types de paiement acceptés par le commerçant.

6. Dispositif mobile selon l'une quelconque des revendications 3 à 5, dans lequel ladite demande de transaction comprend en outre :
un identifiant de transaction généré par un serveur marchand (402) ; et un identifiant dudit serveur marchand (402) à utiliser pendant le traitement dudit paiement électronique.

7. Système de paiement électronique comprenant :
le dispositif mobile (102) selon l'une quelconque des revendications 1 à 6 ;
un serveur marchand (402) ; et
un serveur d'application de paiement (412) en communication avec le serveur marchand (402) et le dispositif mobile (414).

8. Procédé de mise en œuvre d'un paiement électronique à l'aide d'un dispositif mobile (102) comprenant :
l'appel d'une première parmi une pluralité d'applications de paiement (410A à 410D), stockées dans une mémoire (208) dudit dispositif mobile (102), sur la base d'une URL d'application générique associée à chacune des applications de paiement ;
la mise en œuvre par la première application de paiement, en réponse à un appel par le code d'appel d'application générique, d'une fonction de sélection d'application de paiement uniforme qui affiche sur un écran (218) dudit dispositif mobile un choix entre deux desdites applications de paiement ou plus et appelle, sur la base d'une entrée d'un utilisateur de l'appareil mobile, une application sélectionnée parmi lesdites deux applications de paiement ou plus à l'aide d'un code d'appel spécifique à l'application associé à l'application de paiement sélectionnée, dans lequel le code d'appel d'application générique est une URL (localisation de ressources uniforme) générique et le code d'appel spécifique à l'application est une URL spécifique à l'application ; et
en réponse à l'appel par l'URL spécifique à l'application, le traitement par l'application de paiement sélectionnée du paiement électronique à l'aide dudit dispositif mobile (102).

9. Procédé selon la revendication 8, comprenant en outre, avant d'appeler la première application de paiement, la génération par une application marchande (406) d'une demande de transaction à un système d'exploitation (408) dudit dispositif mobile (102), la demande de transaction comprenant ladite URL d'application générique.

10. Procédé selon la revendication 9, dans lequel ladite première application de paiement est appelée par ledit système d'exploitation (408) sur la base de ladite demande de transaction.

11. Procédé selon la revendication 9, dans lequel l'appel de ladite première application de paiement comprend :
en réponse à ladite demande de transaction, l'affichage sur un écran (218) dudit dispositif mobile (102) par ledit système d'exploitation (408) d'un choix entre ladite pluralité d'applications de paiement ;
la réception d'une sélection par l'utilisateur de ladite première application de paiement ;
l'appel de la première application de paiement à l'aide d'une URL spécifique à l'application de la première application de paiement ; et
la détermination que la première demande de paiement ne peut pas traiter le paiement électronique.

12. Procédé selon l'une quelconque des revendications 8 à 11, comprenant en outre la détermination, par l'application de paiement sélectionnée, de si elle est ou non capable de traiter le paiement électronique, dans lequel :
si l'application de paiement sélectionnée est déterminée comme étant capable de traiter le paiement électronique, le paiement électronique est traité par l'application de paiement sélectionnée ; et
si l'application de paiement sélectionnée est déterminée comme n'étant pas capable de traiter le paiement électronique, le procédé comprend en outre la mise en œuvre, par l'application de paiement sélectionnée, de la fonction de sélection d'application de paiement uniforme pour : afficher sur l'écran (218) du dispositif mobile (102) un choix entre deux desdites applications de paiement ou plus autres que l'application de paiement sélectionnée ; et appeler, sur la base d'une entrée d'un utilisateur du dispositif mobile (102), une autre application sélectionnée parmi lesdites deux applications de paiement ou plus à l'aide d'une URL spécifique à l'application associée à l'autre application de paiement sélectionnée ; et
le traitement du paiement électronique par l'application de paiement sélectionnée ultérieurement.
